# EUROPÄISCHE PATENTANMELDUNG

(11) **EP 1 270 894 A2**
(43) Veröffentlichungstag der Anmeldung: **02.01.2003**
(21) Anmeldenummer: 01116874.7
(22) Anmeldetag: 11.07.2001
(51) Int. Cl.: F02B 23/06

(54) **Dieselmotor mit Direkteinspritzung, vorzugsweise für den Einsatz in LKW's**

(30) Priorität: 19.06.2001 DE 10129212
(71) Anmelder: Maier, Peter, 30539 Hannover (DE)
(72) Erfinder: Maier, Peter, 30539 Hannover (DE)

(57) **Zusammenfassung**

Die Erfindung betrifft einen Dieselmotor mit Direkteinspritzung vorzugsweise für den Einsatz in LKW's, der die Kombination folgender Merkmale beinhaltet:
a) Einsatz von 2 unterschiedlich beaufschlagbaren Einspritzdüsen (1, 2)
b) Nach dem Gegenstromprinzip arbeitende Doppeleinlaßventile
c) Je nach Drehzahl bzw. Motorparameter symmetrisches oder asymmetrisches Verhältnis der auf 2 Einspritzdüsen (1, 2) verteilten, einzuspritzenden Kraftstoffmenge (7)

## Beschreibung

Zur Verbesserung des Verbrennungsverhaltens bei Dieselmotoren ist es beispielsweise bekannt, bei einer im wesentlichen ebenflächigen Begrenzung des Brennraums durch den Zylinderkopfs die Einlaßkanäle so zu führen, daß die in den Zylinder einströmende Luft eine starke Drallbewegung um die Zylinderachse erhält, die auch noch dann wirksam ist, wenn der Kraftstoff eingespritzt wird. Diese Lösung ist jedoch nur mit einem fertigungstechnisch, geometrisch komplizierten Zylinderkopf zu realisieren.

In einer anderen in der Literatur beschriebenen Variante weist der Zylinder des Dieselmotors einen verlaufenden Brennraum auf, der zylinderkopfseitig 2 in der Höhe versetzt zueinander angeordnete Stufen besitzt, wobei in der hochliegenden Stufenfläche das Einlaßventil und in der tiefergelegenen Stufenfläche das Auslaßventil jeweils mit den zugehörigen Gasführungskanälen aufinündet. Der Kolbenboden ist entsprechend stufenförmig ausgeführt. Der jeweilige Übergangsbereich zwischen der einen Stufe zur zweiten Stufe ist sowohl am Zylinderkopf wie auch am Kolbenboden mit einer Hinterschneidung versehen, so daß bei einer oberen Totpunktstellung des Kolbens ein sich quer zur Zylinderachse erstreckender, im wesentlichen zylinderförmiger Brennraum entsteht, in den in Achsrichtung - also quer zur Zylinderachse-die Einspitzdüse mündet. Auch diese Bauform setzt einen kompliziert gestalteten Zylinderkopf sowie Kolbenboden voraus. Dies hat unerwünscht hohe Fertigungskosten zur Folge.

Bekannt ist auch eine weitere Dieselmotor-Variante, bei der ebenfalls die Einlaßventile gegenüber den Auslaßventilen höher angeordnet sind, jedoch die zylinderkopfseitige Begrenzung des brennraums auf der Einlaßseite gegenüber der Zylinderachse geneigt ausgerichtet ist und auf der Auslaßseite horizontal verlaufend ist. Der zugehörige Kolbenboden ist in seiner Kontur entsprechend geformt, wobei sich die der Auslaßseite zugeordnete, im wesentlichen horizontale Kolbenbodenfläche bis in den Einlaßbereich erstreckt, so daß in der oberen Totpunktstellung ein quer zur Zylinderachse verlaufender Walzenbrennraum entsteht, in den quer zur Zylinderachse Kraftstoff eingespritzt wird. Auch bei dieser Brennraumgestaltung sind kompliziert geformte Zylinderköpfe bzw. Kolben mit hohen Fertigungspreisen erforderlich.

Überhitzungsprobleme an den Einspritzventilen wurden bisher ebenfalls unzureichend gelöst. So wurde beispielsweise vorgeschlagen, eine Vielzahl von Kraftstoffventilen entlang dem Umfang eines Kreises am Zylinderkopf anzuordnen. Erreicht nun der vom ersten Kraftstoffventil eingespritzte Kraftstoffnebel das vordere Düsenende des zweiten Kraftstoffventils, so besteht die Gefahr, daß das vordere Düsenende des zweiten Kraftstoffventils durch die Verbrennung des vom ersten Kraftstoffventils herrührenden Kraftstoffnebels verbrannt wird. Diese Störung tritt gleichfalls am 3. und dem darauffolgenden Kraftstoffventil auf.

Hier wurde nun versucht, durch eine Verringerung der Zahl der Kraftstoffeinspritzventile das Problem zu lösen. Hierbei nimmt jedoch die Einspritzmenge je Kraftstoffeinspritzventil zu, so daß sich der Wirkungsgrad, z. B. Zerstäubungskraft, Durchdringungskraft des Kraftstoffnebels, verringert. Dieser reduzierte Einspritzwirkungsgrad hat einen erkennbar höheren Kraftstoffverbrauch zur Folge.

Der Erfindung liegt daher die Aufgabe zugrunde, durch eine optimierte, neuartige Konzeption der Brennraumkomponenten wie Kolben, Zylinder, Ventile, Einspritzdüsen, den Treibstoffverbrauch zu verringern, Motorgeräusche zu reduzieren und eine schadstoffarme Funktion des Motors sicherzustellen.

Diese Aufgabe wird erfindungsgemäß gelöst durch einen Dieselmotor mit Direkteinspritzung, vorzugsweise für den Einsatz im LKW-Bereich, welcher mit 2 unterschiedlich beaufschlagbaren Einspritzdüsen arbeitet, nach dem Gegenstromprinzip arbeitende Doppel-Einlaßventile besitzt und je nach Drehzahl bzw. Motorparametern symmetrisches oder asymmetrisches Verhältnis der auf die 2 Einspritzdüsen verteilten, einzuspritzenden Kraftstoffmenge besitzt.

Vorteilhafterweise ist der Zylinderkopf mit einer Brennraum-Wirbelkammer versehen, die sich in gleicher Art im Kolbenboden befindet.

Pro Zylinder sind 2 Einlaß- und 2 Auslaßventile vorgesehen, wobei die Einlaßventile gegenüberliegend angeordnet im Gegenstromverfahren arbeiten.

Bei einer erfindungsgemäßen Variante arbeiten auch die Einspritzdüsen im Gegenstromprinzip. Dies hat den wesentlichen Vorteil, daß durch die gegenläufige Beaufschlagung starke Schalldämpfungseffekte zu verzeichnen sind, welche einen wesentlich ruhigeren Lauf des Motors gewährleisten.

Ein wesentliches erfinderisches Element besteht in der Direkteinspritzung über 2 Einspritzdüsen, welche je nach Motorbelastung, Motordrehzahl und Motorparametern symmetrisch oder unsymmetrisch beaufschlagt werden können. So sind 2 unterschiedliche Spritzmengentabellen in Abhängigkeit von der Drehzahl in den Ansprüchen als Variante 1 und Variante 2 dargestellt. Vorteilhaft ist hierbei u. a. die durch die Zweifachzündung entstehende interne Dämpfung der störenden Schallwellen.

Es hat sich als erfindungsgemäß vorteilhaft herausgestellt, daß bei steigendem Leistungsbedarf (z. B. ab 1.000 U/min) nur die Düse 2 mit mehr Treibstoff beaufschlagt wird, während die Düse 1 eine konstante Treibstoffmenge zugeführt bekommt. Im unteren Drehzahlbereich wird bei steigender Drehzahl bis 1.000 U/min die Düse 1 mit mehr Kraftstoff beaufschlagt, während die Düse 2 konstante Kraftstoffmengen zugeführt bekommt.

Weiterführende erfindungsgemäße Varianten sind den Unteransprüchen zu entnehmen.

Eine Variante der erfindungsgemäßen Lösung ist in den Zeichnungen dargestellt. Es zeigen:
- Fig. 1:: Vertikalschnitt durch Zylinderkopf und Kolben.
- Fig. 2:: Vertikalschnitt durch Zylinderkopf und Kolben.

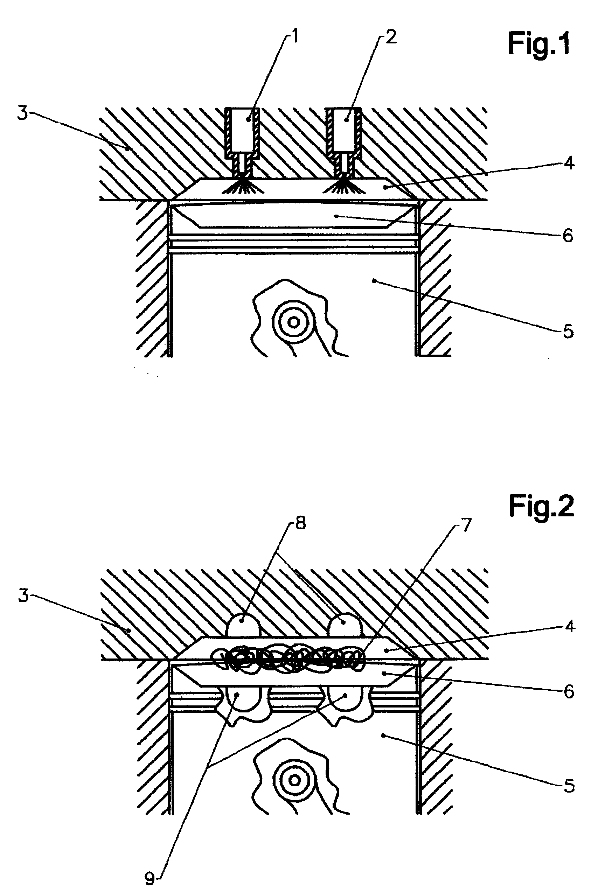

- Zu Fig. 1:: Zylinderkopf (3) mit der oberen Wirbelkammer (4), wobei die Einspritzdüse (1) und die zweite Einspritzdüse (2) dargestellt sind. Der Kolben (5) besitzt im oberen Bereich die untere Wirbelkammer (6).
- Zu Fig. 2:: Im Bereich der oberen Wirbelkammer (4) des Zylinderkopfes (3) befinden sich 2 kleinere Zusatz-Wirbelkammern (8). Im Kolben (5) sind innerhalb der unteren Wirbelkammer (6) gleichfalls - als Gegenpol zu den Zusatz-Wirbelkammern (8) im Bereich der oberen Wirbelkammer (4) ebenfalls - 2 Zusatz-Wirbelkammern (9) vorgesehen.

### Bezugszeichenliste:

- 1): Einspritzdüse 1
- 2): Einspritzdüse 2
- 3): Zylinderkopf
- 4): obere Wirbelkammer
- 5): Kolben
- 6): untere Wirbelkammer
- 7): eingespritztes Kraftstoffgemisch
- 8): Zusatz-Wirbelkammern oben
- 9): Zusatz-Wirbelkammern unten

## Patentansprüche

1. Dieselmotor mit Direkteinspritzung vorzugsweise für den Einsatz in LKW's,
**gekennzeichnet durch**
die Kombination folgender Merkmale:
a) Einsatz von 2 unterschiedlich beaufschlagbaren Einspritzdüsen (1, 2)
b) Nach dem Gegenstromprinzip arbeitende Doppeleinlaßventile.
c) Je nach Drehzahl bzw. Motorparameter symmetrisches oder asymmetrisches Verhältnis der auf 2 Einspritzdüsen (1, 2) verteilten, einzuspritzenden Kraftstoffmenge (7)

2. Dieselmotor mit Direkteinspritzung vorzugsweise für den Einsatz in LKW's, nach Anspruch 1,
**dadurch gekennzeichnet,**
**daß** der Zylinderkopf mit einer Brennraum-Wirbelkammer (4) versehen ist.

3. Dieselmotor mit Direkteinspritzung vorzugsweise für den Einsatz in LKW's, nach den Ansprüchen 1 und 2,
**dadurch gekennzeichnet,**
**daß** der Kolbenboden mit einer Brennraum-Wirbelkammer (6) versehen ist.

4. Dieselmotor mit Direkteinspritzung vorzugsweise für den Einsatz in LKW's, nach einem oder mehreren der Ansprüche 1 - 3,
**dadurch gekennzeichnet,**
**daß** pro Zylinder 2 Einlaß- und 2 Abgasventile vorgesehen sind.

5. Dieselmotor mit Direkteinspritzung vorzugsweise für den Einsatz in LKW's, nach einem oder mehreren der Ansprüche 1 - 4,
**dadurch gekennzeichnet,**
**daß** die 2 Einlaßventile gegenüberliegend angeordnet im Gegenstromverfahren arbeiten.

6. Dieselmotor mit Direkteinspritzung vorzugsweise für den Einsatz in LKW's, nach einem oder mehreren der Ansprüche 1 - 5,
**dadurch gekennzeichnet,**
**daß** die Einspritzdüsen (1, 2) im Gegenstromprinzip arbeiten.

7. Dieselmotor mit Direkteinspritzung vorzugsweise für den Einsatz in LKW's, nach einem oder mehreren der Ansprüche 1 - 6,
**dadurch gekennzeichnet,**
**daß** die Einspritzdüsen (1, 2) parallel zur Kolbenlängsachse arbeiten.

8. Dieselmotor mit Direkteinspritzung vorzugsweise für den Einsatz in LKW's, nach einem oder mehreren der Ansprüche 1 - 7,
**dadurch gekennzeichnet,**
**daß** die Einspritzmengen der 2 Düsen (1, 2) in Abhängigkeit von der Motordrehzahl sich wie folgt darstellen:
| | | Variante 1 | | Variante 2 | |
|---|---|---|---|---|---|
| U/min | Eindüsen-System (Verbrauch in g) | 2-Düsen-System (Verbrauch in g) | | 2-Düsen-System (Verbrauch in g) | |
| | | Düse 1 | Düse 2 | Düse 1 | Düse 2 |
| 500 | 50 | 20 | 20 | 20 | 20 |
| 600 | 60 | 30 | 20 | 28 | 20 |
| 700 | 70 | 40 | 20 | 36 | 20 |
| 800 | 80 | 50 | 20 | 44 | 20 |
| 900 | 90 | 60 | 20 | 52 | 20 |
| 1.000 | 100 | 70 | 20 | 60 | 20 |
| 1.100 | 110 | 70 | 30 | 60 | 28 |
| 1.200 | 120 | 70 | 40 | 60 | 36 |
| 1.300 | 130 | 70 | 50 | 60 | 44 |
| 1.400 | 140 | 70 | 60 | 60 | 52 |
| 1.500 | 150 | 70 | 70 | 60 | 60 |
| 1.600 | 160 | 70 | 80 | 60 | 68 |

9. Dieselmotor mit Direkteinspritzung vorzugsweise für den Einsatz in LKW's, nach einem oder mehreren der Ansprüche 1 - 8,
**dadurch gekennzeichnet,**
**daß** je nach Belastungsart andere Einspritzmengen bzw. -verhältnisse vorgesehen sind, wobei diese je nach Belastungsparameter auch identisch sein können.

10. Dieselmotor mit Direkteinspritzung vorzugsweise für den Einsatz in LKW's, nach einem oder mehreren der Ansprüche 1 - 9,
**dadurch gekennzeichnet,**
**daß** bei steigendem Leistungsbedarf ab 1.000 U/min nur die Düse 2 (2) mit mehr Treibstoff beaufschlagt wird, während die Düse 1(1) eine konstante Treibstoffmenge zugeführt bekommt.

11. Dieselmotor mit Direkteinspritzung vorzugsweise für den Einsatz in LKW's, nach einem oder mehreren der Ansprüche 1 - 10,
**dadurch gekennzeichnet,**
**daß** bei steigender Drehzahl bis 1.000 U/min die Düse 1(1) mit mehr Kraftstoff beaufschlagt wird, während die Düse 2 (2) konstante Kraftstoffmengen zugeführt bekommt.

12. Dieselmotor mit Direkteinspritzung vorzugsweise für den Einsatz in LKW's, nach einem oder mehreren der Ansprüche 1 - 11,
**dadurch gekennzeichnet,**
**daß** der Wirbelraum bzw. die untere Wirbelkammer (6) im Kolben (5) bis zum Kolbenrand reicht.

13. Dieselmotor mit Direkteinspritzung vorzugsweise für den Einsatz in LKW's, nach einem oder mehreren der Ansprüche 1 - 12,
**dadurch gekennzeichnet,**
**daß** die obere Wirbelkammer (4) spiegelsymmetrische Abmessungen zu der unteren Wirbelkammer (6) besitzt.

14. Dieselmotor mit Direkteinspritzung vorzugsweise für den Einsatz in LKW's, nach einem oder mehreren der Ansprüche 1 - 13,
**dadurch gekennzeichnet,**
**daß** die untere Wirbelkammer (6) im mittleren Bereich 2 kleine Zusatz-Wirbelkammern (9) besitzt.

15. Dieselmotor mit Direkteinspritzung vorzugsweise für den Einsatz in LKW's, nach einem oder mehreren der Ansprüche 1 - 14,
**dadurch gekennzeichnet,**
**daß** die obere Wirbelkammer (4) im mittleren Bereich 2 kleine Zusatz-Wirbelkammern (8) besitzt.
